# EUROPÄISCHE PATENTSCHRIFT

(11) **EP 0 801 139 B1**
(45) Veröffentlichungstag und Bekanntmachung des Hinweises auf die Patenterteilung: **29.12.1999**
(21) Anmeldenummer: 96810223.6
(22) Anmeldetag: 10.04.1996
(51) Int. Cl.: C22C 21/08, C22C 21/02, B21D 26/02

(54) **Bauteil**
Component
Elément de construction

(43) Veröffentlichungstag der Anmeldung: 15.10.1997
(73) Patentinhaber: Alusuisse Technology & Management AG, 8212 Neuhausen am Rheinfall (CH)
(72) Erfinder: Schwellinger, Pius, D-78250 Tengen (DE)

(56) Entgegenhaltungen:
- EP-A- 0 548 859
- DE-A- 3 243 371
- DE-A- 4 421 744

## Beschreibung

Die Erfindung betrifft ein Bauteil aus einer Legierung vom Typ AlMgSi, hergestellt aus einen Hohlkörper durch Innenhochdruckumformen.

Komplexe Bauteilgeometrien mit unterschiedlichen Querschnitten, die mittels konventioneller Verfahren wie mechanischem Aufweiten nicht herstellbar sind, können durch Innenhochdruckumformen gefertigt werden. Bei diesem Verfahren wird ein Hohlkörper durch Aufbringen eines Innendrucks in eine Form hinein umgeformt. Beispielsweise werden die abgedichteten Enden in die Form hinein gedrückt, oder ein Stempel wird langsam nach aussen gezogen, so dass das Material in Kontakt mit einer festen Oberfläche nachfliessen kann. Es sind auch Verfahren bekannt, die mit einem hydrostatischen Gegendruck arbeiten. Bei komplizierten Formen kann auch eine Biegung vor dem eigentlichen Innenhochdruckumformen notwendig sein. Der eingesetzte Hohlkörper ist in vielen Fällen ein gerades Rohrstück, jedoch kann auch eine aus Blech gefügte Vorform verwendet werden. Bei Aluminiumwerkstoffen eignen sich auch Strangpressprofile als Hohlkörper bzw. Vorformen. Diese werden beispielsweise eingesetzt als Rohr, als Profil mit einer an das Endprodukt angepassten Kontur oder auch als Mehrkammer-Hohlprofil.

Neben den vielen Verfahrensvarianten, die zur Erzielung eines hohen Umformgrades entwickelt wurden, ist auch der eingesetzte Werkstoff von grosser Bedeutung. Seine Umformeigenschaften bestimmen wesentlich den höchstmöglichen Umformgrad, wobei als wichtiger Anhaltspunkt für eine gute Umformbarkeit eine hohe Dehnung dienen kann. Beim Innenhochdruckumformen ist zudem die Dehnung in Querrichtung von grosser Bedeutung, wobei neben einer guten Umformbarkeit auch die Gleichmässigkeit der Eigenschaften ein wesentlicher Gesichtspunkt ist. So können sich beispielsweise bei einem Strangpressprofil die Eigenschaften von Stranganfang zu Strangende aufgrund des unterschiedlichen Umformgrades beim Strangpressen ändern.

Zu beachten sich auch die Anforderungen an das fertige Bauteil. Von der Konstruktion her können beispielsweise ein bestimmtes Festigkeitsniveau, bestimmte Mindestwerte der Dehnung, Korrosionsbeständigkeit oder andere wesentliche Kennwerte vorgegeben werden.

Zu den Aluminiumwerkstoffen, die heute durch Innenhochdruckumformen zu Bauteilen verarbeitet werden, gehören insbesondere Standardlegierungen vom Typ AlMgSi. Obschon Legierungen dieses Typs gegenüber anderen Legierungssystemen hinsichtlich ihrer Dehnung und Umformbarkeit gute Voraussetzungen für das Innenhochdruckumformen mitbringen, ist eine weitere Optimierung der Eigenschaften wünschenswert.

Angesichts dieser Gegebenheiten stellt sich somit die Aufgabe, geeignete Werkstoffe mit besonders guter Umformbarkeit bei guten mechanischen Eigenschaften des fertigen Bauteils bereitzustellen.

Zur erfindungsgemässen Lösung der Aufgabe führt, dass der zur Herstellung des Bauteils eingesetzte Hohlkörper aus einer Legierung besteht, die in Gew.-%

| | |
|---|---|
| Silizium | 0,3 bis 1,6 |
| Magnesium | 0,3 bis 1,3 |
| Eisen | max. 0,5 |
| Kupfer | max. 0,9 |
| Mangan | max. 0,5 |
| Vanadium | 0,05 bis 0,3 |
| Kobalt | max. 0,3 |
| Chrom | max. 0,3 |
| Nickel | max. 0,8 |
| Zirkon | max. 0,3 |

sowie weitere Legierungselemente einzeln max. 0,05, insgesamt max. 0,15 und Aluminium als Rest enthält.

Die erfindungsgemässe Zugabe von Vanadium zu Legierungen des Typs AlMgSi führt zu einem feinkörnigen Gefüge mit ausgezeichneten Umformeigenschaften und guter Dehnung auch in Querrichtung.

Bei einer bevorzugten Zusammensetzung weist die Legierung 0,08 bis 0,13 Gew.-% Vanadium auf und enthält zudem 0,05 bis 0,15 Gew.-% Mangan.

Die Verwendung der erfindungsgemässen Legierungszusammensetzung zur Herstellung von Bauteilen durch Innenhochdruckumformen führt zu einer günstigen Mikrostruktur des Bauteilgefüges. Ein wichtiges Merkmal der Mikrostruktur, das die Umformeigenschaften verbessert, ist eine möglichst niedrige Korngrösse. Dies wird mit der erfindungsgemässen Legierungszusammensetzung erreicht, wobei auch während der in manchen Fällen unvermeidlichen Zwischenglühung vor weiteren Umformungen die Korngrösse sich nur unwesentlich vergrössert.

Aus einem aus der erfindungsgemässen Legierung hergestellten Hohlkörper lassen sich Bauteile mit allen heute bekannten Verfahren zum Innenhochdruckumformen fertigen. Insbesondere umfassen die Verfahren auch Varianten, bei denen zusätzlich Material von aussen nachgeschoben und/oder bei denen mindestens ein Schieber nach aussen verschoben wird. Zudem kann der Hohlkörper vor oder während dem Innenhochdruckumformen gebogen werden. Ebenso ist es möglich, zur Erzielung hoher Umformgrade mit einem hydrostatischen Gegendruck zu arbeiten. Vor dem Erreichen des endgültigen Umformgrades kann der Hohlkörper einer Zwischenglühung unterworfen werden, ohne dass hierbei die Korngrösse wesentlich zunimmt.

Eine bevorzugte Verwendung des erfindungsgemässen Bauteils wird im Fahrzeugbau gesehen.

Die Vorteilhaftigkeit der erfindungsgemäss eingesetzten Legierungen ergibt sich aus der nachfolgenden Gegenüberstellung einer Legierung mit erfindungsgemässer Zusammensetzung und einer Vergleichslegierung.

### Beispiel

Eine Legierung A mit erfindungsgemässer Zusammensetzung und eine Vergleichslegierung B wurden unter gleichen Bedingungen zu Flachprofilen verpresst. Eine Innenhochdruck umformung aus einem Hohlkörper wurde bei der erfindungsgemäßen Legierung nicht durchgeführt.

| Leg. | Si | Fe | Cu | Mn | Mg | Cr | Zn | V | Zr |
|---|---|---|---|---|---|---|---|---|---|
| A | .74 | .20 | .21 | .08 | .78 | .005 | .005 | .10 | .001 |
| | | | | | | | | | |
| B | .71 | .22 | .19 | .08 | .77 | .005 | .007 | .004 | .16 |

Die Flachprofile wurden zu Zugproben für eine Prüfung quer zur Pressrichtung weiterverarbeitet. An den einer identischen Wärmebehandlung unterzogenen Zugproben wurden die nachstehend zusammengestellten mechanischen Eigenschaften in Querrichtung gemessen.

| Leg. | Rp0.2 [MPa] | Rm [MPa] | Ag [%] | A5 [%] |
|---|---|---|---|---|
| A | 294 | 360 | 13.7 | 20.2 |
| B | 291 | 359 | 12.7 | 18.0 |
| Hierbei bedeuten: Rp0.2 Streckgrenze Rm Zugfestigkeit A5, Ag Bruchdehnung | | | | |

Weitere Untersuchungen zur Korngrösse haben gezeigt, dass die erfindungsgemässe Legierung A gegenüber der Vergleichslegierung B bei Glühoperationen wie beispielsweise einer Zwischenglühung eine wesentlich geringere Kornvergröberung zeigt.

## Patentansprüche

1. Bauteil aus einer Legierung vom Typ AlMgSi, hergestellt aus einem Hohlkörper durch Innenhochdruckumformen,
dadurch gekennzeichnet, dass
die Legierung in Gew.-%
| | |
|---|---|
| Silizium | 0,3 bis 1,6 |
| Magnesium | 0,3 bis 1,3 |
| Eisen | max. 0,5 |
| Kupfer | max. 0,9 |
| Mangan | max. 0,5 |
| Vanadium | 0,05 bis 0,3 |
| Kobalt | max. 0,3 |
| Chrom | max. 0,3 |
| Nickel | max. 0,8 |
| Zirkon | max. 0,3 |
sowie weitere Legierungselemente einzeln max. 0,05, insgesamt max. 0,15 und Aluminium als Rest enthält.

2. Bauteil nach Anspruch 1, dadurch gekennzeichnet, dass die Legierung 0,05 bis 0,15 Gew.-% Mangan enthält.

3. Bauteil nach Anspruch 1 oder 2, dadurch gekennzeichnet, dass die Legierung 0,08 bis 0,13 Gew.-% Vanadium enthält.

4. Verfahren zur Herstellung eines Bauteils nach einem der Ansprüche 1 bis 3, dadurch gekennzeichnet, dass ein aus der Legierung hergestellter Hohlkörper durch Innenhochdruckumformen umgeformt wird.

5. Verfahren nach Anspruch 4, dadurch gekennzeichnet, dass zusätzlich Material von aussen nachgeschoben wird.

6. Verfahren nach Anspruch 4 oder 5, dadurch gekennzeichnet, dass mindestens ein Schieber nach aussen verschoben wird.

7. Verfahren nach einem der Ansprüche 4 bis 6, dadurch gekennzeichnet, dass der Hohlkörper vor oder während dem Innenhochdruckumformen gebogen wird.

8. Verfahren nach einem der Ansprüche 4 bis 7, dadurch gekennzeichnet, dass ein hydrostatischer Gegendruck eingesetzt wird.

9. Verfahren nach einem der Ansprüche 4 bis 8, dadurch gekennzeichnet, dass vor dem Erreichen des endgültigen Umformgrades eine Zwischenglühung durchgeführt wird.

10. Verwendung eines Bauteils nach einem der Ansprüche 1 bis 3 oder hergestellt nach dem Verfahren nach einem der Ansprüche 4 bis 9 im Fahrzeugbau.

## Claims

1. Component consisting of an alloy of the AlMgSi type, produced from a hollow body by internal high-pressure forming, characterised in that the alloy contains in % by weight
| | | |
|---|---|---|
| silicon | | 0.3 to 1.6 |
| magnesium | | 0.3 to 1.3 |
| iron | max. | 0.5 |
| copper | max. | 0.9 |
| manganese | max. | 0.5 |
| vanadium | | 0.05 to 0.3 |
| cobalt | max. | 0.3 |
| chromium | max. | 0.3 |
| nickel | max. | 0.8 |
| zirconium | max. | 0.3 |
and other alloying elements individually to a maximum of 0.05 and altogether to a maximum of 0.15, with the remainder aluminium.

2. Component according to claim 1, characterised in that the alloy contains 0.05 to 0.15 % by weight manganese.

3. Component according to claim 1 or claim 2, characterised in that the alloy contains 0.08 to 0.13 % by weight vanadium.

4. Process for the production of a component according to one of claims 1 to 3, characterised in that a hollow body produced from the alloy is formed by internal high-pressure forming.

5. Process according to claim 4, characterised in that material is additionally supplied from the outside.

6. Process according to claim 4 or claim 5, characterised in that at least one slide is displaced towards the outside.

7. Process according to one of claims 4 to 6, characterised in that the hollow body is bent before or during the internal high-pressure forming.

8. Process according to one of claims 4 to 7, characterised in that a hydrostatic back pressure is used.

9. Process according to one of claims 4 to 8, characterised in that intermediate annealing is carried out before the final degree of deformation is achieved.

10. Use of a component according to one of claims 1 to 3 or produced by the process according to one of claims 4 to 9 in vehicle construction.

## Revendications

1. Elément de construction en alliage du type AlMgSi, fabriqué à partir d'un corps creux par formage sous haute pression intérieure, caractérisé en ce que l'alliage contient, en % en poids,
| | | |
|---|---|---|
| Silicium | | 0,3 à 1,6 |
| Magnésium | | 0,3 à 1,3 |
| Fer | max. | 0,5 |
| Cuivre | max. | 0,9 |
| Manganèse | max. | 0,5 |
| Vanadium | | 0,05 à 0,3 |
| Cobalt | max. | 0,3 |
| Chrome | max. | 0,3 |
| Nickel | max. | 0,8 |
| Zirconium | max. | 0,3 |
ainsi que d'autres éléments d'alliage, max. 0,05 individuellement, max. 0,15 au total, et de l'aluminium formant le reste.

2. Elément de construction selon la revendication 1, caractérisé en ce que l'alliage renferme 0,05 à 0,15 % en poids de manganèse.

3. Elément de construction selon la revendication 1 ou 2, caractérisé en ce que l'alliage referme 0,08 à 0,13 % en poids de vanadium.

4. Procédé de fabrication d'un élément de construction selon l'une des revendications 1 à 3, caractérisé en ce qu'un corps creux fabriqué au départ de l'alliage est déformé plastiquement par formage sous haute pression intérieure.

5. Procédé selon la revendication 4, caractérisé en ce qu'un appoint de matière est poussé de l'extérieur.

6. Procédé selon la revendication 4 ou 5, caractérisé en ce qu'au moins un tiroir est poussé vers l'extérieur.

7. Procédé selon l'une des revendications 4 à 6, caractérisé en ce que le corps creux est plié avant ou pendant le formage sous haute pression intérieure.

8. Procédé selon l'une des revendications 4 à 7, caractérisé en ce qu'une contre-pression hydrostatique est appliquée.

9. Procédé selon l'une des revendications 4 à 8, caractérisé en ce qu'avant que soit atteint le degré de déformation plastique définitif, un recuit intermédiaire est appliqué.

10. Utilisation d'un élément de construction selon l'une des revendications 1 à 3 ou fabriqué avec le procédé selon les revendications 4 à 9, en construction automobile.
